# EUROPEAN PATENT SPECIFICATION

(11) **EP 3 563 248 B1**
(45) Date of publication and mention of the grant of the patent: **30.11.2022**
(21) Application number: 17888103.3
(22) Date of filing: 29.12.2017
(51) Int. Cl.: H04L 65/403

(54) **UNIFIED, BROWSER-BASED ENTERPRISE COLLABORATION PLATFORM**
VEREINHEITLICHTE, AUF BROWSERN BASIERENDE UNTERNEHMENSKOLLABORATIONSPLATTFORM
PLATEFORME DE COLLABORATION D'ENTREPRISE UNIFIÉE BASÉE SUR NAVIGATEUR

(30) Priority: 30.12.2016 US 201662440437 P; 30.12.2016 US 201662440473 P; 30.12.2016 US 201662440424 P; 30.12.2016 US 201662440509 P; 30.12.2016 US 201662440626 P; 26.12.2017 US 201715854393; 28.12.2017 US 201715857020; 28.12.2017 US 201715856652
(43) Date of publication of application: 06.11.2019
(73) Proprietor: Akamai Technologies, Inc., Cambridge, MA 02142 (US)
(72) Inventor: GERO, Charles E., Cambridge, MA 02142 (US); MEHTA, Ahbijit C., Cambridge, MA 02142 (US); HOUMAN, Thomas, Cambridge, MA 02142 (US); WILLIAMS, Brandon O., Cambridge, MA 02142 (US); LOHNER, Martin, Cambridge, MA 02142 (US); BURD, Dana, Cambridge, MA 02142 (US); SHTOKMAN, Vladmir, Cambridge, MA 02142 (US)
(74) Representative: TLIP Limited
(86) International application number: PCT/US2017/068958
(87) International publication number: WO 2018/126134

(56) References cited:
- EP-A1- 2 863 632
- EP-A2- 1 381 237
- WO-A1-2015/080734
- CN-A- 102 594 793
- US-A1- 2002 124 098
- US-A1- 2007 153 782
- US-A1- 2009 089 379
- US-A1- 2012 284 638
- US-A1- 2014 149 512
- US-A1- 2014 324 942
- US-A1- 2015 052 455
- US-A1- 2016 164 968
- US-A1- 2016 171 090
- US-B1- 9 113 032
- JANG-JACCARD JULIAN ET AL: "WebRTC-based video conferencing service for telehealth", COMPUTING, SPRINGER, VIENNA, AT, vol. 98, no. 1, 25 September 2014 (2014-09-25), pages 169-193, XP035887799, ISSN: 0010-485X, DOI: 10.1007/S00607-014-0429-2 [retrieved on 2014-09-25]
- ERIK NYGREN ET AL: "The Akamai network", OPERATING SYSTEMS REVIEW, ACM, NEW YORK, NY, US, vol. 44, no. 3, 17 August 2010 (2010-08-17), pages 2-19, XP058201460, ISSN: 0163-5980, DOI: 10.1145/1842733.1842736

## Description

### BACKGROUND

### Technical Field

This application relates generally to cloud-based collaboration among users of computing machines.

### Brief Description of the Related Art

Real-time communications (e.g., videoconferencing, shared document editing, screen sharing, and the like) over the Internet have been a part of our daily lives at work and at home. That said, many of the existing technical solutions are not interoperable, and there are still difficult technical problems (e.g., NAT traversal) that can stymie direct peer-to-peer connections, thus dictating the use of relays to ensure connectivity. When relays are overloaded, call quality suffers. Further, multi-party video conferencing typically requires a separate connection for each pair of users, and this approach does not scale.

WebRTC, an Internet standard, was created to make videoconferencing and point-to-point data transfer easier to implement. In particular, WebRTC (which stands for Web Real Time Communications) seeks to take the most critical elements of video chat and move them to one of the most commonly used tools for accessing the Internet, namely, a web browser. WebRTC is supported with plugins by both Google Chrome and Mozilla Firefox. It allows the browser to access the client machine's camera and microphone, provides a method for establishing a direct connection between two users' browser and to use that connection to send audio and video, and it provides a method for sending arbitrary data streams across a connection. WebRTC also mandates that all data is encrypted.

While WebRTC provides significant advantages, it does not itself address the scaling challenges associated with connectivity across NAT and multi-party conferencing. Thus, for example, a relay infrastructure (using TURN) is needed to establish connections between two peers behind NATs, and building a robust and scalable relay infrastructure is challenging. Additionally, multi-user video conferencing over WebRTC requires full mesh connectivity between all users; that is, a separate connection must be established between each pair of users. Each user needs to upload their video (and other data) multiple times - once for each peer - and the resources required grow in a way proportional to the square of the number of users, which does not scale. These issues are not limited to WebRTC; indeed, existing, dedicated video conferencing solutions struggle with the same problems. For example, Microsoft's Skype relays are often overloaded, significantly impacting the quality of Skype calls that cannot use a direct peer-to-peer connection. Another common solution, LifeSize, needs the same full-mesh connectivity described above, which severely limits the number of different remote sites that can participate in one meeting.

Jang-Jaccard Julian et al. in COMPUTING, SPRINGER, VIENNA, AT, vol. 98, no. 1, 25 September 2014 pages 169-193 describe WebRTC-based video conferencing service for telehealth, EP1381237 describes multi-participant conference system with controllable content and delivery via back-channel video interface and US2016/171090 describes Systems and Methods for Collaborative Project Analysis. Erik Nygren et al. in "The Akamai Network", Operating Systems Review, ACM, New York, NY, US, vol. 44, no. 3, 12 August 2010, pages 2-19 describe the components and capabilities of a large-scale distributed computing platform. Document US9113032 B1 discloses a solution for selection of participants for display in a video call based on ratings of the participants, which are dependent on their conversation properties, such as video quality. Document US2002124098 A1 discloses a reflector network is used in conjunction with a content delivery network (CDN) to enable requesting end users to subscribe to live streams that have been published to CDN entry points. These are all background art documents in the field

The remains a need to enhance the performance, reliability and scalability of WebRTC and to provide a ubiquitous platform for real-time collaboration.

### BRIEF SUMMARY

A system for enterprise collaboration associated with an overlay network is the first aspect of the present invention which is defined by the subject-matter of independent claim 1. Preferred embodiments are provided in the dependent claims. Any embodiments of the disclosure below which are not encompassed by the claims are provided for reference only.

A system for enterprise collaboration is associated with an overlay network, such as a content delivery network (CDN) or other cloud-accessible architecture is claimed. In a representative implementation, the overlay network comprises machines capable of ingress, forwarding and broadcasting traffic, together with a mapping infrastructure. The system comprises a front-end application, a back-end application, and set of one or more APIs through which the front-end application interacts with the back-end application. The front-end application is a web or mobile application component that provides one or more collaboration functions. The back-end application comprises a signaling component that maintains state information about each participant in a collaboration, a connectivity component that manages connections routed through the overlay network, and a multiplexing component that manages a multi-peer collaboration session to enable an end user peer to access other peers' media streams through the overlay network rather than directly from another peer. Peers preferably communicate with the platform using WebRTC. A collaboration manager component enables users to configure, manage and control their collaboration sessions.

The foregoing has outlined some of the more pertinent features of the disclosed subject matter. These features should be construed to be merely illustrative. Many other beneficial results can be attained by applying the disclosed subject matter in a different manner or by modifying the subject matter as will be described.

### BRIEF DESCRIPTION OF THE DRAWINGS

For a more complete understanding of the subject matter and the advantages thereof, reference is now made to the following descriptions taken in conjunction with the accompanying drawings, in which:
FIG. 1 is a block diagram illustrating a known distributed computer system configured as a content delivery network (CDN);
FIG. 2 is a representative CDN edge machine configuration;
FIG. 3 depicts the various components of a web-based collaboration solution according to this disclosure; and
FIG. 4 illustrates a multi-party videoconference setup that is enabled by associating the web-based solution of this disclosure with an overlay network.

### DETAILED DESCRIPTION

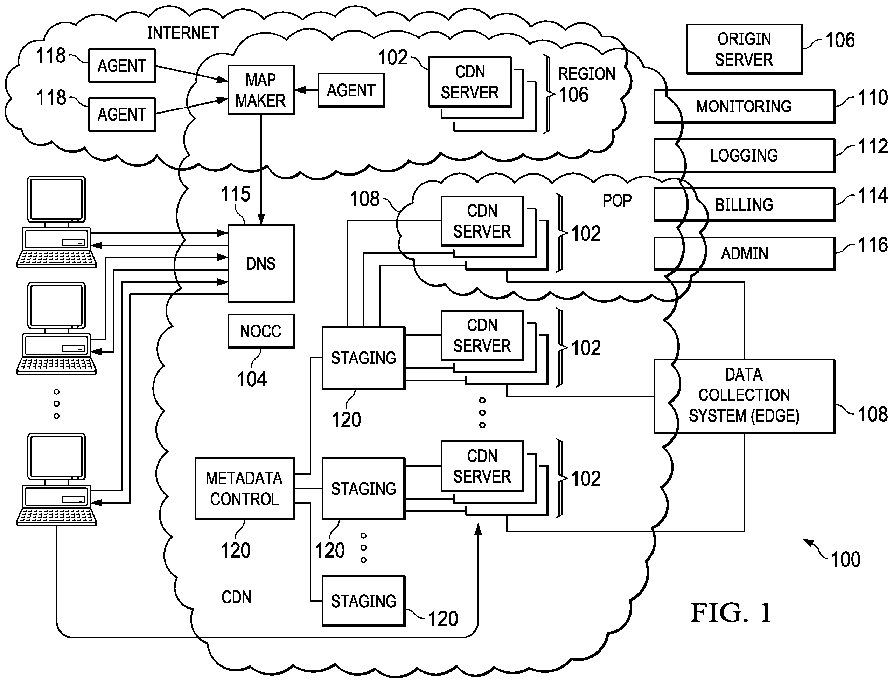

In a known system, such as shown in FIG. 1, a distributed computer system 100 is configured as a content delivery network (CDN) and is assumed to have a set of machines 102a-n distributed around the Internet. Typically, most of the machines are servers located near the edge of the Internet, i.e., at or adjacent end user access networks. A network operations command center (NOCC) 104 manages operations of the various machines in the system. Third party sites, such as web site 106, offload delivery of content (e.g., HTML, embedded page objects, streaming media, software downloads, and the like) to the distributed computer system 100 and, in particular, to "edge" servers. Typically, content providers offload their content delivery by aliasing (e.g., by a DNS CNAME) given content provider domains or sub-domains to domains that are managed by the service provider's authoritative domain name service. End users that desire the content are directed to the distributed computer system to obtain that content more reliably and efficiently. Although not shown in detail, the distributed computer system may also include other infrastructure, such as a distributed data collection system 108 that collects usage and other data from the edge servers, aggregates that data across a region or set of regions, and passes that data to other back-end systems 110, 112, 114 and 116 to facilitate monitoring, logging, alerts, billing, management and other operational and administrative functions. Distributed network agents 118 monitor the network as well as the server loads and provide network, traffic and load data to a DNS query handling mechanism 115, which is authoritative for content domains being managed by the CDN. A distributed data transport mechanism 120 may be used to distribute control information (e.g., metadata to manage content, to facilitate load balancing, and the like) to the edge servers.

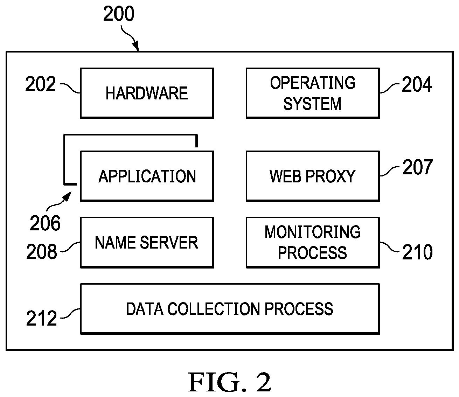

As illustrated in FIG. 2, a given machine 200 in the content delivery network comprises commodity hardware (e.g., an Intel Pentium processor) 202 running an operating system kernel (such as Linux or variant) 204 that supports one or more applications 206a-n. To facilitate content delivery services, for example, given machines typically run a set of applications, such as an HTTP proxy 207 (sometimes referred to as a "global host" or "ghost" process), a name server 208, a local monitoring process 210, a distributed data collection process 212, and the like. For streaming media, the machine may include one or more media servers, such as a Windows Media Server (WMS) or Flash server, as required by the supported media formats, or it may utilize HTTP-based delivery of chunked content fragments that constitute a stream.

A CDN edge server is configured to provide one or more extended content delivery features, preferably on a domain-specific, customer-specific basis, preferably using configuration files that are distributed to the edge servers using a configuration system. A given configuration file preferably is XML-based and includes a set of content handling rules and directives that facilitate one or more advanced content handling features. The configuration file may be delivered to the CDN edge server via the data transport mechanism. U.S. Patent No. 7,111,057 illustrates a useful infrastructure for delivering and managing edge server content control information, and this and other edge server control information can be provisioned by the CDN service provider itself, or (via an extranet or the like) the content provider customer who operates the origin server.

The CDN may include a storage subsystem, such as described in U.S. Patent No. 7,472,178.

The CDN may operate a server cache hierarchy to provide intermediate caching of customer content; one such cache hierarchy subsystem is described in U.S. Patent No. 7,376,716.

The CDN may provide secure content delivery among a client browser, edge server and customer origin server in the manner described in U.S. Publication No. 20040093419. Secure content delivery as described therein enforces SSL-based links between the client and the edge server process, on the one hand, and between the edge server process and an origin server process, on the other hand. This enables an SSL-protected web page and/or components thereof to be delivered via the edge server.

In a typical operation, a content provider identifies a content provider domain or sub-domain that it desires to have served by the CDN. The CDN service provider associates (e.g., via a canonical name, or CNAME) the content provider domain with an edge network (CDN) hostname, and the CDN provider then provides that edge network hostname to the content provider. When a DNS query to the content provider domain or sub-domain is received at the content provider's domain name servers, those servers respond by returning the edge network hostname. The edge network hostname points to the CDN, and that edge network hostname is then resolved through the CDN name service. To that end, the CDN name service returns one or more IP addresses. The requesting client browser then makes a content request (e.g., via HTTP or HTTPS) to an edge server associated with the IP address. The request includes a host header that includes the original content provider domain or sub-domain. Upon receipt of the request with the host header, the edge server checks its configuration file to determine whether the content domain or sub-domain requested is actually being handled by the CDN. If so, the edge server applies its content handling rules and directives for that domain or sub-domain as specified in the configuration. These content handling rules and directives may be located within an XML-based "metadata" configuration file.

### Unified browser-based enterprise collaboration platform using an overlay network

The following assumes familiarity with WebRTC.

According to this disclosure, an overlay network fabric is used to provide a unified browser-based enterprise collaboration platform. In particular, by distributing multiplexing and a relay infrastructure over a platform, such as a CDN (as described above), a solution that facilitates multi-user is provided but without requiring full mesh connectivity. While a primary use case as described below is for high-quality video conferencing that is scalable to large numbers of users, this is not a limitation, as the cloud-supported multiplexing and relay techniques herein may be used to provide other multi-user collaboration, such as chat, document sharing, and desktop sharing, all in a seamless and scalable manner. The overlay network can also provide additional functions and features to support a collaboration session; as described below, these may include, without limitation, persistent storage and recording of sessions and documents, integration with existing videoconferencing and telecommunications infrastructure (LifeSize rooms, PSTN, etc.), management, and others.

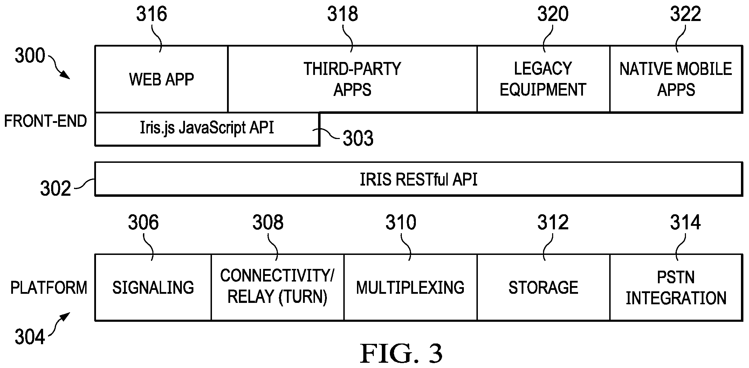

FIG. 3 depicts a representative architecture 300 for an enterprise collaboration platform using an overlay network according to an aspect of this disclosure. There are three primary elements: a front-end application 300, RESTful APIs 302, and a back-end or platform 304. The front-end application (app) 300 preferably is built on a number of components (described below) that are preferably accessed through the one or more RESTful APIs 302. As will be seen, this architecture allows on-premises infrastructure to be integrated with the solution, and it could also be used to allow third parties to create applications powered by the platform. The platform components 304 include signaling 306, connectivity 308, multiplexing 310, storage 312, and PSTN integration 314. In one embodiment, the platform 304 comprises part of an overlay network (or leverages elements thereof), but this is not a requirement, as the solution herein may be provided as a standalone architecture. Further, the notion of a "component" herein may involve multiple machines, whether co-located or distributed, as well as the processes and programs executing thereon.

Turning first to the platform, the signaling component 306 preferably is a distributed signaling system that keeps track of users' state (e.g., "Online", "Away", "Busy", etc..), and it is used to transmit the information (i.e., SDP) necessary to initiate an RTCPeerConnection. The signaling component 306 preferably integrates with various user authentication and identity management solutions, although this is not a requirement. The connectivity component 308 manages video, voice and data connections routed though the overlay network platform to handle Network Access Translation (NAT) traversal, as well as to provide enhanced performance and security.

The multiplexing component 310 comprises multiplexing machines to allow for scalable, multi-peer sessions. This component makes it so that each peer only needs to upload its media stream once. Other peers are then able to access peers' media streams through overlay network edge machines (rather than by direct connections to peers). The multiplexing component provides for multiplexing in the cloud to significantly reduce edge bandwidth requirements that would otherwise be required to support WebRTC (which otherwise dictates a new connection be setup for pair of peers in a multi-user collaboration). With this approach herein of using the overlay network, there is no requirement to setup a new connection for each pair of peers in a multi-peer collaboration (conference, chat, etc.) session.

As will be described, and as a further feature, preferably the multiplexing component 310 intelligently adjusts the quality of different users' streams to enhance performance - e.g., only deliver HD streams for people who are currently speaking, deliver lower-quality streams to mobile devices, etc.

The storage component 312 allows overlay network customers to (optionally) store data from a collaboration session (e.g., record a meeting, save work on a collaborative document, etc.). The PSTN integration component 314 allows users to join sessions from the PSTN and legacy telecommunications equipment, and it allows users to call out over the PSTN. Although not depicted, the platform may include a transcoding component that allows for communications between browsers that do not have the same video codecs implemented, and for one-way broadcasting to browsers that do not support WebRTC.

As noted, the front-end components 300 interact with the back-end platform 304 using an application programming interface, such as RESTful APIs 302. These APIs 302 provide methods for exchanging SDPs to set up calls, provide information on which chat rooms are available, which media streams are available in each chat room, which user media streams in a given chat room are most "relevant" at any given moment, and so forth. The APIs preferably also provide methods for interacting with other parts of the back-end, e.g., verifying users' identities, accessing storage (saving data, retrieving data, searching), and the like. As also depicted, the APIs also preferably include a JavaScript (JS) API 303, referred to herein as "iris.js," which is a thin layer on top of the base WebRTC API and other HTML5 components. The iris.js API 303 preferably uses the other RESTful APIs to integrate with the overlay network fabric. In particular, the iris.js API allows applications to establish and use video, voice, and data channels. Preferably, the front-end web app is built on the JavaScript API, and third party applications may use this API to build apps that seamlessly integrate with the platform.

The front-end components 300 comprise a web application (or web app) 316, which is a unified communication tool built on iris.js. The web app 316 routes video, voice, and data through the overlay network fabric. The web app also provides (or interfaces to) one or more collaboration functions or technologies, such as video chat, collaborative document editing, desktop sharing, and the like. Because the web app 316 preferably is built in an API (such as iris.js 303, which can support several data channels), it is easily extensible. Thus, users are able to choose which voice, video, and data channels to connect to for a given session - for example, several users in a video conference room could use the room's camera and mic for videoconferencing with a remote site, but each individual user might use his or her personal laptop to edit a shared document. Preferably, the web app 316 is skinnable so it can be rebranded and used by enterprise customers. As noted, because iris.js is built on top of the WebRTC API's, third parties are able to easily adapt existing WebRTC applications to use the solution described herein. The third party applications 318 are depicted here as part of the front-end, but they may be separate and distinct. As noted above, the RESTful API 302 also makes integration with other collaboration tools possible. As also depicted, the front end may include or have associated therewith legacy on-premises equipment 320, such as LifeSize rooms. Further, the front-end may include or have associated therewith native mobile apps 322, such as devices and tablets that run native iOS and Android apps (as opposed to HTML5 apps in mobile browsers, which are also supported). The API layer 302 enables a service provider or third parties to easily build native mobile applications for the solution.

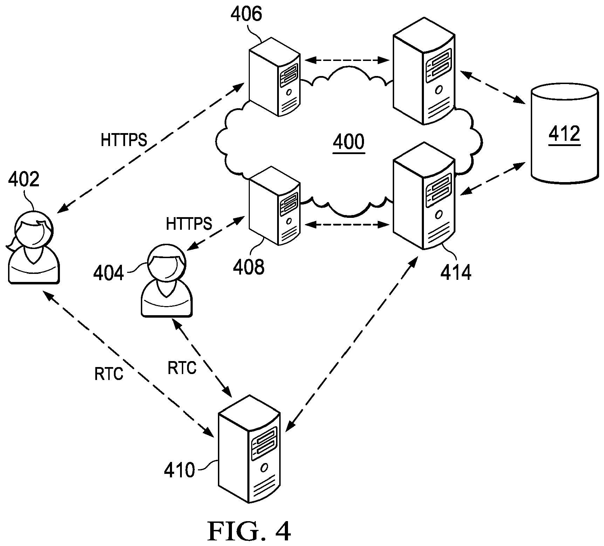

In one embodiment, the above-described solution provides a multi-party voice and video chat system. FIG. 4 depicts further implementation details of a multi-party solution implemented within an overlay network 400, such as the Akamai content delivery network (CDN). As depicted, there are two end user peers 402 and 404, and each peer is associated (e.g., using conventional CDN DNS mapping operations) to respective edge servers 406 and 408. Each peer also establishes a WebRTC connection to a media server 410 that hosts the videoconference (in this example scenario). A signaling back-end is powered by a distributed data store 412. In an example implementation, the platform is implemented using a combination of Node.js, PHP, Apache, Cassandra, and Kurento Media server running on Ubuntu Linux machines. Cassandra data is accessed via the RESTful API, which is powered by Node.js running behind an Apache proxy 414. In this approach, signaling information is exchanged via HTTPS interactions using the RESTful API. Multiplexing is accomplished using the Kurento Media Server (KMS) running on cloud Ubuntu VMs running in geographically-distributed locations. In operation, the Node.js signaling application performs a DNS lookup to the CDN mapping to determine an optimal (in terms of one or more factors such as latency, loss, load, availability, reachability, etc.) media server to which as client should connect. Clients upload their live media stream via WebRTC to the chosen media server. The connection is set up by the signaling layer through the RESTful API. Other clients who wish to subscribe to that media stream connect to the same media server (via the signaling layer) and receive the stream.

While the approach shown in FIG. 4 is typical, it is not a limitation. In an alternative embodiment, the underlying network environment may allow for direct connectivity between peers. This requirement is met among users, for example, as long as peers are connected to an enterprise VPN. Another approach is to use STUN and TURN servers (such as coturn) that run, for example, on cloud virtual machine (VM) infrastructure. In still another embodiment, a TURN-compliant version of a relay network for peer-to-peer connectivity may be used. In the multi-party case described above, STUN and TURN are not needed because it is assumed that clients can connect directly to multiplexing servers. Still another approach to connectivity may involve a multicast overlay network to distribute streams.

In this example implementation, the API is powered by a Node.js web application. The Node.js application interacts with Kurento Media Server and Cassandra to orchestrate calls. The "iris.js" JavaScript API is a client-side ECMAScript 6 library that allows web applications to interact with the system via the Iris RESTful API. It contains functionality that allows for easy WebRTC connection management, call orchestration, and automatic, dynamic quality switching, e.g., as the relevancy of different participants in a room changes. The web application is an HTML5 Web App written on top of iris.js. The views are powered by a PHP application.

The overlay network provides various support services to the conferencing platform. Thus, e.g., these services provide one or more of: deployment, versioning, integration with back-end overlay network infrastructure (key management), load balancing, monitoring, single sign-on, auto-scaling, and so forth.

With 1:1 conferencing, underlying media sessions preferably are end-to-end encrypted. For multi-party conferences, media sessions are encrypted between users' clients and the overlay network.

Any Internet-accessible client may be used in a conference provided it has a video camera and microphone/speaker.

As has been described, the solution is a video and audio conversation platform that does not require any special equipment other than a client having a browser, a webcam, and a microphone. The service provider (e.g., a CDN) preferably provides (e.g., from a web page) a "lobby" or index/directory from which a user can identify or start a conference. By opening his or her browser to the lobby page, a user can create a room (conference), join the room, see who is already in the room, change his or her relevancy (make your own video bigger relative to others), mute others, and mute yourself. In addition, the user may be provided the ability to communicate (with other users) that are within the same domain, set download quality, set upload quality, update a room, delete a room, leave feedback (when the user leaves the room), use a non-standard camera, see who created each room, and provide room deep linking (using SSO). A further feature is to enable the user to create a presentation.

In the lobby, the rooms may be organized by type, and it may be created programmatically. The person who creates the room may have his or her identity identified, and this information may be captured from a user authentication token. A room may be modified by a person who creates the room. The person may whitelist or blacklist users in a room. A default scenario is to allow no one to join a room except for persons that are explicitly allowed by the room creator via a whitelist.

Presentations allow for another type of room type. These types of rooms allow 1-to-many communications. In a standard multi-party room, every participant sees and hears everyone else. In contrast, typically a presentation has one presenter, one moderator, and a number of participants. A participant can raise a question, typically first to the moderator, who may then pass the question (if approved) on to the presenter. A room control panel may be provided to the presenter in his or her display. A participant control panel may be provided to the participant is his or her display.

Client-side JavaScript code may be subject to tampering; thus, to improve security preferably all server-side inputs (including URL parameters) are scrubbed and validated. To discourage brute-force attacks, a server-side delay is added to failed authentication attempts. To prevent a guess as to when an extended delay indicates a failed request, even successful authentication attempts are subjected to short delays. Some randomness may be added to both delay types. Preferably, user passwords are salted, and user passwords are encrypted before leaving the clients. Content is secured by virtue of the WebRTC transport. Authentication preferably is handled via token-based authentication. Client JavaScript preferably is minified (removing unnecessary white spaces, etc.) and uglified (renames variables and functions).

Other variants and extensions may be implemented. These include room and lobby chat, file sharing, e-mail/calendar integration, screen sharing, vanity rooms, anonymous-access rooms (including one-time invites to outside users), scaling, and look and feel changes. Scaling involves multiple media servers, such as the KMS. Scaling enhancements involve uploading each stream to its own media server, and sending streams from one media server to another. The latter technique enables the provider to insert an intermediary stream layer to facilitate fan-out.

Generalizing, the collaboration session management functions described above may be accessed by an authenticated and authorized user (e.g., an administrator) via a secure web-based portal that is provided by the overlay network service provider. In a representative embodiment, the collaboration management functions are configured and managed from one or more SSL-secured web pages that comprise a secure collaboration session management portal.

The technique described herein assumes that the overlay network provides a network of machines capable of ingress, forwarding, and broadcasting traffic, together with a mapping infrastructure that keeps track of the load, connectivity, location, etc., of each machine and can hand this information back to clients using DNS or HTTPS. An approach of this type is described in U.S. Patent Nos. 6,665,726 and 6,751,673, assigned to Akamai Technologies, Inc.. The technique described there provides for an application layer-over-IP routing solution (or "OIP routing").

The multiplexing component (of the back-end application) implements or facilitates multicast OIP to distribute individuals' video streams in a multiparty videoconference. Multicast OIP could may also be used as a generic real-time publish-subscribe overlay network or for broadcast of video in real-time.

In this approach, a publisher (which may be just an individual user) sends data to the multicast network. Clients (e.g., end user peers running mobile devices, laptops, etc.) subscribe to this data stream. The overlay network handles intelligently routing and fanning-out the data stream to all subscribers. The forwarding network may use multiple paths, forward error correction, and the like to ensure the reliability and performance of the stream. Preferably, the intermediate communications also are encrypted.

The publisher and subscriber operations are now further described. To initiate the session, a publisher makes a DNS (or HTTPS) request to a load balancer operated by the overlay network service provider (e.g., Akamai global traffic manager service). The request preferably contains a unique identifier for the publisher's data stream. The load balancer finds an ingress node on the network that has available bandwidth, CPU, and other resources, and that will have good connectivity to the publisher (close by from a network perspective), and hands back an IP address (or URI) corresponding to that node. This is a known OIP operation. The publisher connects to the ingress node. Then, the publisher sends its data (e.g., a video stream generated by a webcam) to the ingress node. The overlay network handles distributing the video stream to subscribers. To obtain the stream, subscribers make a DNS (or HTTPS) request to mapping (overlay network DNS). This request contains the unique identifier of the data stream which the subscriber wants to consume. The mapping system finds an egress node that can deliver the stream to the subscriber, and hands back an IP address (or URI) for that egress node. If necessary, the system builds a fan-out tree by assigning forwarding nodes between the ingress and egress nodes. The system forwards data through the forwarding nodes to the egress nodes. The subscriber then connects to the IP/URI it got in the first step, and consumes the data stream.

A typical use case is WebRTC. In the WebRTC case, the ingress and egress nodes handle WebRTC PeerConnections. Subscribers to a given stream have individual WebRTC PeerConnections to individual egress nodes; the overlay system takes care of distributing the stream from the ingress nodes to the individual egress nodes.

### Representation of contextual information in a 3D stereophonic soundscape

According to this aspect, it is assumed that there are multiple participants to a conference, such as a videoconference (or even just an audio conference), that is being facilitated using the above-described platform in association with the overlay network. In this aspect, different participants' audio is then projected from different positions in a 3D stereophonic soundscape in the following manner.

In particular, preferably the HTML5 Web Audio API is used to have a client browser render different participants' audio at particular positions in 3D space. The 3D position of a speaker might depend on one or more factors, such as a position of that person's video window in the screen, whether that person is speaking, the location of the person, when the person joined the call, or simply by hashing the speaker's ID to a position on a ring. Different speakers' relative positions may remain stable to communicate contextual information. Users move "forward" and "backward," or "up" and "down" in space, as their relevancy (as described below) changes.

The implementation is in client-side JavaScript running in a web browser, preferably that functions as follows:
Given a set of audio streams (via WebRTC or HTTPS), the client computes a 3D position for each audio stream by carrying out a set of operations.

At step (1), a "target area" region of space is identified. Typically, this region is in front of the listener (e.g., within a 45° cone in front of the viewer, and between, say, 30 cm and 3 m away from the listener.

At step (2), each audio stream is assigned a 3D position within that target region as follows. In this discussion, "left," "right," "up," "down," "forward" and "backward" are from the listener's perspective. If applicable (i.e., if video corresponding to the audio stream is displayed in the browser window), the 3D position corresponds to the point on the screen where the video is displayed; otherwise, the stream is given a position based on contextual information related to the content of the stream. For a multiparty real-time video conversation, preferably this is done as follows: a hash function takes a unique identifier for each stream (e.g., each participant's name), and maps that to a left/right position within the target area. Thus, each individual speaker will maintain a stable position relative to other speakers, even if other speakers join or leave the conference. Alternately, a hash function maps each stream's unique identifier to a number in the range [0,1], and then each stream is assigned a position within the left/right target region such that the positions are evenly (or otherwise deterministically) spaced within the target region. Preferably, the up/down and forward/backward position are then based on "relevancy" and other contextual information for each stream. For example, if one person is giving a presentation, their position may be "up" relative to other participants (who may be asking questions). Or, someone who just joins the room may be "back" compared to someone who has recently spoken.

At step (3), and using the HTML5 Web Audio API, the browser renders each audio stream at the 3D position associated with it in step (2). The audio is played over the browser's stereo (or surround sound) speakers. The effect to the end user is that it will sound like each stream originates at its associated 3D position.

Preferably, steps (2) and (3) are performed continuously, so, for example, as an individual stream's associated 3D position changes, the end-user experiences this as that stream "moving" in the stereophonic soundscape.

If relevancy support is included in the solution (and this is not required), the following details may be implemented.

### Dynamic speaker selection and live stream delivery for multi-party video conferencing

As noted above, traditional multiparty videoconferencing methods involve gathering an audio/video stream from each individual end user's client, and distributing each user's stream to all other end users. The delivery of these streams is usually facilitated by either a full-mesh topology or a centralized multiplexing server. That approach does not scale to large numbers of users.

As an alternative, this disclosure describes a method comprising server- and client-based logic for intelligently and dynamically determining which streams are most important - i.e., which streams correspond to users who are currently speaking, have spoken recently, or are about to speak - and delivering those streams at higher quality. Remaining users' streams preferably are delivered at lower video quality (or audio-only). This approach saves bandwidth and enables scalable, real-time multi-party videoconferencing. Stated another way, and when each client consumes a fixed total bandwidth, the way in which the bandwidth is apportioned is dynamically adjusted to enhance user experience.

According to this approach, the platform maintains a set of variables, which preferably are continuously updated for each participant, and which are then used to determine an importance or "relevancy" of each user's audiovisual (a/v) stream. Preferably, these variables are derived from multiple sources, including audio filters, video filters, user input, and other measures of individual and group behavior. Example variables/filters include, without limitation: speaking (audio), crowd noise (audio), face detection (video), group detection (video), microphone mute (user input), raise hand (user input), and so forth. Preferably, and according to this disclosure, the one or more of such variables are used to construct a probability function and, in particular, a probability density function (PDF), across several possible stream "attributes," such as whether a stream represents an individual speaking, a small group, an individual who is participating in a conversation, audience members who are reacting to a main presenter, and so forth. Further, preferably heuristics are built by leveraging statistical modeling and/or machine learning (ML) techniques (e.g., using a training set of users in a multi-party context) to construct PDFs for each attribute, e.g., from (raw or smoothed) measurements of the variables. Preferably, these PDFs are then combined using relative weighting techniques to drive both client and server behavior.

The nature of the relative weighting techniques may vary. There may be a predefined set of techniques, or a set of best practices, a default set, or some combination.

Thus, in the client case, preferably the PDFs, along with information on the client device's capabilities and network connectivity, are used to drive the end-user experience. For example, the video images of different speakers on the screen and the loudness of different speakers' audio streams may be given different prominence based on the relevance of each speaker, and on the capabilities of the client. In this manner, a client with a high-bandwidth connectivity displays the two most "relevant" speakers in High Definition (HD), N other speakers in small video windows, and only audio for everyone else, whereas a mobile client with low connectivity displays only one low-quality video, and audio for everyone else. These are just representative examples of course. In the server case, the PDFs preferably are used to guide routing and multiplexing of individual user streams. Streams that are more relevant may be afforded increased bandwidth and resource allocation. The PDFs may also be used to guide assignments of streams to different media servers. In both the client and server cases, preferably one or more additional transforms, such as decay functions, are used to dampen oscillations in relevancy changes. For example, if two people are speaking, the decay function prevents constant switching between each person's video.

The following describes one implementation using the above-described collaboration infrastructure and how it is used to provide this functionality. In this example, the clients are browsers, and the servers are cloud machines. Logic is implemented in client-side JavaScript, and in the server-side in Node.js JavaScript. As noted above, preferably client-server API calls are via RESTful HTTPS requests, and the media flows are via the HTML5 WebRTC API.

At step (1), a client makes a RESTful API call via HTTPS to the server indicating that it wants to join a conference. At step (2), the server adds the client to conference. Typically, this involves adding information to a distributed database. At step (3), the client makes another API request indicating what type of media it has to offer (audio, video, etc...), what capabilities it has (e.g., total bandwidth does it have, type of device, number of video streams it can handle, number of HD video streams it can handle, how many lower quality streams, etc.). The information on client capabilities typically comes from several sources, such as information that the client explicitly sends in the API request, information (e.g., on the client's hardware capabilities, on the client's connectivity performance, etc.) that is collected by a client-side JavaScript code (using HTML5 APIs such as the Navigation Timing API, the Web Performance API, and the Network Information API, and WebRTC), and information that is inferred from server-side code, such as the client's User-Agent, the network performance of ISP/network that the client is in, and the actual measured bandwidth, throughput, latency, etc., to the client.

At step (4), the server allocates resources for the media stream that the client will upload. Typically, this step involves making a DNS request to a load balancer to find a free media server, communicating the offer/answer SDP information needed to create a WebRTC connection between the client and the media server, and recording information about the connection in the database. At step (5), the server adds the client to list of participants in room, and assigns an initial relevancy. As noted above, relevancy is preferably a multi-dimensional data structure that comprises one or more variables derived from multiple sources, including audio filters, video filters, user input, and other measures of individual and group behavior. Example variables/filters include: speaking (audio), crowd noise (audio), face detection (video), group detection (video), mic mute (user input), raise hand (user input), and the like. At step (6), the server compiles a list of all participants in room along with each client's full multidimensional relevancy, as well as a summary score.

Preferably, clients can determine an ordered ranking of which participant in the conference is "most relevant" based on the summary score. In one exemplary but nonlimiting embodiment, the "summary" can comprise a single variable (e.g., time since hand last-raised), a weighted average of variables, the PDFs as described above, or some combination.

At step (7), clients periodically poll the server for changes to the participant list and the relevancy for each participant. In lieu of polling, clients may also be notified via a push notifications or via a publisher/subscriber system). At step (8), clients also periodically send information back to the server that is used to build their relevancy object and summary scores. The server combines this information with information that it collects (for example, information from server-side a/v filters, information on how long a client has been in a room, etc.) and continuously updates the relevancy object and summary score for each participant.

At step (9), clients change which WebRTC media streams they subscribe to, preferably via the following mechanism: (i) first, given the client capabilities (step (3)), the client knows what kind of stream it can handle (e.g., N high-quality streams, M low-quality streams, S audio streams, and so forth); (ii) the client JavaScript (iris.js) sorts the other participants in order of "summary" relevancy score; (iii) the client then associates the most relevant participants with the highest quality streams, preferably in order; and (iv) updates the associations as needed, e.g., by examining if a client is associated with a different quality stream than the client is currently subscribed, unsubscribing from the old quality stream and subscribes to the quality of stream that the client is currently associated with. In other words, the client JavaScript seamlessly swaps the different qualities so that an interruption is not visible to the end user. Subscription preferably is via API calls, as described in step (4).

Thus, for example, if a client can handle one (1) HD stream, four (4) low-quality streams, and one hundred (100) audio streams, then the participant with the highest summary relevancy gets the HD stream, the next four highest summary scores get low-quality streams, and the remaining participants are associated with audio-only streams. As a more concrete example, if Alice is speaking and Bob is quiet, a third client may be subscribed to an HD stream for Alice and an SD stream for Bob. If Bob starts speaking, then the client will drop the HD connection to Alice and switch to an SD connection. The client will then subscribe to an HD connection for Bob and swap that in for the old SD connection.

Although not intending to be limiting, for each new WebRTC media stream description, preferably the client makes a series of API calls to the server to allocate media server resources and to broker a new connection in a way that is analogous to step (4) above.

An alternative method in step (9) involves having each client subscribe to only one WebRTC media stream per another participant. Here, the server performs the above steps of sorting participants based on summary relevancy score, and the server takes care of adjusting the quality of each stream when summary relevancy score changes. In this case, however, the client does not have to subscribe/unsubscribe to a different quality WebRTC stream at any time; clients only need to subscribe/unsubscribe to WebRTC streams when other participants join/leave the conference. The server keeps track of a maximum total bandwidth that a given client can handle, and it makes sure that the aggregate quality of all WebRTC streams delivered to that client is below the maximum total bandwidth threshold. In this case, the client only needs to consume the relevancy to handle the following step.

At step (10), JavaScript on the client preferably uses the full multi-dimensional relevancy object to determine how to display the other participants' video in the browser window. Thus, for example, current speakers are given a position of prominence, people with hands raised are highlighted, etc.

In summary, each client preferably always consumes an amount of bandwidth that is below a fixed maximum but, within this constraint, the bandwidth is dynamically apportioned (by the above-described technique) such that the most-relevant participants are delivered at the highest quality, resulting in an enhanced experience for the end-user.

Thus, and according to this aspect of the disclosure, dynamic quality adjustment is driven (e.g., by the client) using the notion of relevancy. As has been described, typically relevancy is a property of each media stream; preferably, it is a multi-dimensional object that contains information such as whether the user is speaking, whether the user has muted his or her microphone, how recently the user spoke, if the user is raising his or her hand, and so forth, and that is used to determine which streams are most important. Preferably, server-side switching is used so that only the most relevant streams are delivered, say, at high quality.

In another embodiment, switching is done by the client; in particular, the server lets the client know the relevancy of all participants' streams, and the client (based on its capabilities), dynamically subscribes to the high-quality version of the most relevant streams and low-quality versions of other streams.

### Constructing 3D sound profile of a room

According to this aspect, it is assumed that there are multiple participants to a conference, such as a videoconference (or even just an audio conference), that is being facilitated using the platform in association with the overlay network. The notion here is to collect audio (and perhaps video) from laptops (or other client devices) of different users in the same room, and to use processing in the cloud to create an ad-hoc, high quality microphone array. This is accomplished, preferably as follows.

The cloud platform first recognizes when multiple laptops (or other client devices) are in the same room using information such as IP address, the HTML5 Location API, and even by correlating audio feeds (i.e., if two users' microphones pick up the same sound, one can say that they are in the same room). Then, by comparing the audio signals from the different microphones in the same room (perhaps with the aid of having laptops/other devices actually make ultrasonic sounds through their speakers), the cloud platform reconstructs their relative positions. Finally, the cloud platform combines the audio feeds of the different clients to create a high-fidelity room audio feed. The end result is similar to that of using a microphone array and conferencing equipment, but without a "smart" client.

It is assumed that the "clients" are browsers that are participating in a real-time multiparty WebRTC call. Each browser is sending its real-time audio feed to a cloud platform such as described above via WebRTC. The following operations (as depicted in FIG. 5) are then carried out, preferably in the cloud:
At step (1), the cloud platform identifies a set of clients in a multiparty call who are all in the same physical room. Preferably, this determination is made using the one or more of the following information: the clients' IP addresses, the clients' physical locations (collected with client-side JavaScript using the HTML5 Geolocation API (if available) and reported back to the platform via RESTful HTTPS requests), explicit client input (e.g., client-side JavaScript exposes a UI element to the end user, and the end user can explicitly specify what room they are in, and the client reports this back to the platform via RESTful HTTPS requests); and passive correlation of the content of each individual audio stream. For example, if one person is speaking in a room, all microphones in that room will pick up that person's speech. Preferably, the cloud platform uses both expert-system and machine learning techniques to determine that the audio from all microphones are listening to the same audio source. This may be accomplished using algorithms that determine that the streams are highly correlated. In one embodiment, the training set for a machine learning algorithm comes from audio streams that have been verified to be in the same room by explicit client input and by active correlation. To facilitate active correlation of each audio stream, client-side JavaScript makes the speakers on each individual client machine emit a sound at an ultrasonic frequency inaudible to humans. Each client will emit a uniquely identifiable sound. If this sound is present in any other client audio stream, that other client is in the same room.

At step (2), and once a set of clients have been identified to be in the same room, the cloud platform compares "landmark" events in each audio stream - these are events that correspond to the same sound. For example, a landmark event may be a person saying a particular word, or the uniquely identifiable sounds from the active correlation method. By comparing the relative timing and loudness of these landmark events, the platform uses triangulation to infer the relative position and orientation of each microphone.

At step (3), the platform combines the individual audio streams from each microphone and uses the relative position information to render a single (stereo or multichannel surround) audio stream which represents a high-quality 3D recording of the audio in the room.

At step (4), the platform mixes audio from the different microphones to enhance the audibility of the person currently speaking.

At step (5), and rather than delivering the audio received from individual clients' microphones, the platform delivers to the other clients the high-quality stereophonic/surround audio stream computed from step (503). Other clients play back this high quality stream to get a high-fidelity 3D representation of the audio in the target room.

Each above-described process preferably is implemented in computer software as a set of program instructions executable in one or more processors, as a special-purpose machine.

Representative machines on which the subject matter herein is provided may be Intel Pentium-based computers running a Linux or Linux-variant operating system and one or more applications to carry out the described functionality. One or more of the processes described above are implemented as computer programs, namely, as a set of computer instructions, for performing the functionality described.

While the disclosed subject matter has been described in the context of a method or process, the subject matter also relates to apparatus for performing the operations herein. This apparatus may be a particular machine that is specially constructed for the required purposes, or it may comprise a computer otherwise selectively activated or reconfigured by a computer program stored in the computer. Such a computer program may be stored in a computer readable storage medium, such as, but is not limited to, any type of disk including an optical disk, a CD-ROM, and a magnetic-optical disk, a read-only memory (ROM), a random access memory (RAM), a magnetic or optical card, or any type of media suitable for storing electronic instructions, and each coupled to a computer system bus. A given implementation of the present invention is software written in a given programming language that runs in conjunction with a DNS-compliant name server (e.g., BIND) on a standard Intel hardware platform running an operating system such as Linux. The functionality may be built into the name server code, or it may be executed as an adjunct to that code. A machine implementing the techniques herein comprises a processor, computer memory holding instructions that are executed by the processor to perform the above-described methods.

While given components of the system have been described separately, one of ordinary skill will appreciate that some of the functions may be combined or shared in given instructions, program sequences, code portions, and the like.

While given components of the system have been described separately, one of ordinary skill will appreciate that some of the functions may be combined or shared in given instructions, program sequences, code portions, and the like. Any application or functionality described herein may be implemented as native code, by providing hooks into another application, by facilitating use of the mechanism as a plug-in, by linking to the mechanism, and the like.

The techniques herein generally provide for the above-described improvements to a technology or technical field, as well as the specific technological improvements to various fields including collaboration technologies including videoconferencing, chat, document sharing and the like, distributed networking, Internet-based overlays, WAN-based networking, efficient utilization of Internet links, and the like, all as described above.

Having described our invention, what is claimed now follows below.

## Claims

1. A system (100) for enterprise collaboration associated with an overlay network, the overlay network comprising machines capable of ingress, forwarding and broadcasting traffic, together with a mapping infrastructure, the system comprising:
a front-end application (300) comprising a web or mobile application component (316) that interfaces to or provides one or more collaboration functions;
a back-end application (304) comprising a signaling component (306) that maintains state information about each peer in a collaboration, a connectivity component (308) that manages connections routed through the overlay network, and a multiplexing component (310) that manages a multi-peer collaboration session to enable an end user peer to access other peers' media streams through the overlay network edge machines identified through the mapping infrastructure that keeps track of load, connectivity and locations of one or more overlay network edge machines rather than directly from another peer; and
a set of one or more application programming interfaces, APIs, through which the front-end application (300) component interacts with the back-end application (304) components;
wherein each of the components and the APIs are implemented as software executed in one or more hardware processors;
wherein using the overlay network enables the multi-peer collaboration session without requiring a new connection be setup for each pair of peers;
wherein the multiplexing component (310) is configured to perform a set of operations, comprising:
for each of a set of participants in a multi-party videoconference, obtaining information about a relevance of a participant's stream;
based on the information, determining which participant stream has a given relevance score relative to one or more other participant streams; and
modifying a stream quality of one or more of the participant streams based on the determination of which participant stream has the given relevance score relative to one or more other participant streams.

2. The system as described in claim 1 wherein the APIs include a JavaScript, JS, API that executes in association with a base Web Real Time Communications, WebRTC, API and one or more Hypertext Markup Language Version 5, HTML5, components.

3. The system as described in claim 2 wherein the front-end application (300) is a client-side script library built on the JS API.

4. The system as described in claim 3 wherein the client-side script library provides WebRTC connection management.

5. The system as described in claim 1 wherein the collaboration session is one of: a videoconference, a chat, sharing a document, and sharing a desktop.

6. The system as described in claim 1 wherein the multiplexing component (310) provides multicast application layer-over-Internet Protocol, IP, routing during the collaboration session.

7. The system as described in claim 1 wherein the back-end application (304) further includes a storage component (312) to store data from the collaboration session.

8. The system as described in claim 1 wherein the back-end application (304) further includes a Public Switched Telephone Network, PSTN, integration component (314).

9. The system as described in claim 1 the multi-peer collaboration session is implemented over Web Real Time Communications, WebRTC.

10. The system as described in claim 1 further including a collaboration session manager.

11. The system as described in claim 10 wherein the collaboration session manager outputs one or more web pages from which an authorized end user can execute one or more operations associated with the collaboration session, optionally wherein the one or more operations includes one of: creating or deleting a room, joining a room, viewing participants in a room, whitelisting or blacklisting participants for a room, adjusting a relevancy value of a media stream, muting or unmuting an audio stream, adjusting a quality of a media stream, providing feedback, adjusting equipment in a room, creating a presentation for a room, creating a vanity room, creating an anonymous access room, adjusting a look and feel of a room, enabling room-specific collaboration activities, and providing room deep-linking.

12. The system as described in claim 1 wherein the multiplexing component (310) is configured to perform a set of operations, comprising:
given a set of audio streams that comprise a conference, identifying a set of clients in the conference that are in a common physical space;
for the identified set of clients, identifying at least one landmark event that is found in each of the audio streams;
with respect to the at least one landmark event, comparing a relative timing and loudness of the landmark event, and using the relative timing and loudness information to infer a relative position of each microphone being used by a client in the set of clients;
combining the individual audio streams received from the microphones and using the relative position information to render a single audio stream that represents a high quality recording of the audio in the common physical space; and
in lieu of delivering individual ones of the set of audio streams, delivering the single audio stream.

13. The system as described in claim 1 wherein the front-end application (300) is configured to perform a set of operations, comprising:
given a set of audio streams that comprise the conference and that are being received, computing a 3D position for each audio stream in a 3D soundscape; and
outputting each audio stream at the 3D position computed.

14. The system as described in claim 1 wherein the connectivity component (308) is configured to perform a set of operations, comprising:
publishing a video stream to the overlay network by using the mapping infrastructure to find an ingress node, and receiving the video stream from a publisher at the ingress node; and
enabling one or more subscribers to subscribe to the video stream by, for each subscriber: using the mapping infrastructure to find an egress node, and delivering the video stream to the subscriber from the egress node.

## Patentansprüche

1. System (100) für Unternehmenskollaboration, das einem Überlagerungs-Netzwerk zugeordnet ist, wobei das Überlagerungs-Netzwerk Maschinen umfasst, die in der Lage sind, Verkehr einzugeben, weiterzuleiten und zu senden, zusammen mit einer Abbildungsinfrastruktur, wobei das System Folgendes umfasst:
eine Front-End-Anwendung (300), die eine Web- oder mobile Anwendungskomponente (316) umfasst, die eine Schnittstelle zu einer oder mehreren Kollaborationsfunktionen bildet oder diese bereitstellt;
eine Back-End-Anwendung (304), die eine Signalisierungskomponente (306), die Zustandsinformationen über jeden Peer in einer Kollaboration pflegt, eine Konnektivitätskomponente (308), die Verbindungen verwaltet, die durch das Überlagerungs-Netzwerk geleitet werden, und eine Multiplexing-Komponente (310) umfasst, die eine Multi-Peer-Kollaborationssitzung verwaltet, um es einem Endbenutzer-Peer zu ermöglichen, auf die Medienströme anderer Peers über die Überlagerungs-Netzwerk-Edge-Maschinen zuzugreifen, die durch die Abbildungsinfrastruktur identifiziert werden, die die Last, Konnektivität und Standorte einer oder mehrerer Überlagerungs-Netzwerk-Edge-Maschinen verfolgt, anstatt direkt von einem anderen Peer; und
einen Satz von einer oder mehreren Anwendungsprogrammierschnittstellen, APIs, durch die die Komponente der Front-End-Anwendung (300) mit den Komponenten der Back-End-Anwendung (304) interagiert;
wobei jede der Komponenten und der APIs als Software implementiert sind, die in einem oder mehreren Hardwareprozessoren ausgeführt wird;
wobei das Verwenden des Überlagerungs-Netzwerks die Multi-Peer-Kollaborationssitzung ermöglicht, ohne dass eine neue Verbindung für jedes Paar von Peers aufgebaut werden muss;
wobei die Multiplexing-Komponente (310) dazu konfiguriert ist, einen Satz von Operationen durchzuführen, der Folgendes umfasst:
für jeden eines Satzes von Teilnehmern in einer Mehrparteien-Videokonferenz, Erhalten von Informationen über eine Relevanz des Streams eines Teilnehmers;
basierend auf den Informationen, Bestimmen, welcher Teilnehmer-Stream eine gegebene Relevanzbewertung relativ zu einem oder mehreren anderen Teilnehmer-Streams hat; und
Modifizieren einer Stream-Qualität von einem oder mehreren der Teilnehmer-Streams basierend auf der Bestimmung, welcher Teilnehmer-Stream die gegebene Relevanzbewertung relativ zu einem oder mehreren anderen Teilnehmer-Streams hat.

2. System nach Anspruch 1, wobei die APIs eine JavaScript-JS-API enthalten, die in Verbindung mit einer Basis-Web-Real-Time-Communications-, WebRTC-, API- und einer oder mehreren Hypertext-Markup-Language-Version-5-Komponenten, HTML5-Komponenten, ausgeführt wird.

3. System nach Anspruch 2, wobei die Front-End-Anwendung (300) eine Client-seitige Script-Bibliothek ist, die auf der JS-API aufgebaut ist.

4. System nach Anspruch 3, wobei die Client-seitige Script-Bibliothek eine WebRTC-Verbindungsverwaltung bereitstellt.

5. System nach Anspruch 1, wobei die Kollaborationssitzung eine ist von: einer Videokonferenz, einem Chat, Teilen eines Dokuments und Teilen eines Desktops.

6. System nach Anspruch 1, wobei die Multiplexing-Komponente (310) während der Kollaborationssitzung ein Routing mit Multicast-Anwendungsschicht-über-Internet-Protokoll, IP, bereitstellt.

7. System nach Anspruch 1, wobei die Back-End-Anwendung (304) ferner eine Speicherkomponente (312) zum Speichern von Daten aus der Kollaborationssitzung enthält.

8. System nach Anspruch 1, wobei die Back-End-Anwendung (304) ferner eine Integrationskomponente (314) für ein öffentliches Fernsprechnetz, PSTN, enthält.

9. System nach Anspruch 1, wobei die Multi-Peer-Kollaborationssitzung über Web Real Time Communications, WebRTC, implementiert wird.

10. System nach Anspruch 1, ferner enthaltend einen Kollaborationssitzungsmanager.

11. System nach Anspruch 10, wobei der Kollaborationssitzungsmanager eine oder mehrere Webseiten ausgibt, von denen ein autorisierter Endbenutzer eine oder mehrere Operationen ausführen kann, die der Kollaborationssitzung zugeordnet sind, wobei die eine oder mehreren Operationen optional eine der folgenden enthalten: Erstellen oder Löschen eines Raums, Beitreten zu einem Raum, Anzeigen von Teilnehmern in einem Raum, Whitelisting oder Blacklisting von Teilnehmern für einen Raum, Anpassen eines Relevanzwerts eines Medien-Streams, Stummschalten oder Aufheben der Stummschaltung eines Audio-Streams, Anpassen einer Qualität eines Medien-Streams, Bereitstellen von Feedback, Anpassen von Geräten in einem Raum, Erstellen einer Präsentation für einen Raum, Erstellen eines Vanity Room, Erstellen eines Raums mit anonymem Zugang, Anpassen des Look-and-feel eines Raums, Ermöglichen raumspezifischer Kollaborationsaktivitäten und Bereitstellen von Raum-Deep-Linking.

12. System nach Anspruch 1, wobei die Multiplexing-Komponente (310) dazu konfiguriert ist, einen Satz von Operationen durchzuführen, umfassend:
angesichts eines Satzes von Audio-Streams, die eine Konferenz umfassen, Identifizieren eines Satzes von Clients in der Konferenz, die sich in einem gemeinsamen physischen Raum befinden;
für den identifizierten Satz von Clients, Identifizieren mindestens eines Landmark-Ereignisses, das in jedem der Audio-Streams gefunden wird;
in Bezug auf das mindestens eine Landmark-Ereignis, Vergleichen eines relativen Zeitpunkts und einer relativen Lautstärke des Landmark-Ereignisses und Verwenden der relativen Zeitpunkt- und Lautstärkeinformationen zum Ableiten einer relativen Position jedes Mikrofons, das von einem Client in dem Satz von Clients verwendet wird;
Kombinieren der einzelnen Audio-Streams, die von den Mikrofonen empfangen werden, und Verwenden der relativen Positionsinformationen, um einen einzigen Audio-Stream wiederzugeben, der eine hochwertige Aufzeichnung des Audios in dem gemeinsamen physischen Raum darstellt; und
anstatt Liefern individueller aus dem Satz von Audio-Streams, Liefern des einzigen Audio-Streams.

13. System nach Anspruch 1, wobei die Front-End-Anwendung (300) dazu konfiguriert ist, einen Satz von Operationen durchzuführen, umfassend:
bei einem gegebenen Satz von Audio-Streams, die die Konferenz umfassen und die empfangen werden, Berechnen einer 3D-Position für jeden Audio-Stream in einem räumlichen 3D-Klangbild; und
Ausgeben jedes Audio-Streams an der berechneten 3D-Position.

14. System nach Anspruch 1, wobei die Konnektivitätskomponente (308) dazu konfiguriert ist, einen Satz von Operationen durchzuführen, umfassend:
Verbreiten eines Video-Streams im Überlagerungs-Netzwerk durch Verwenden der Abbildungsinfrastruktur, um einen Eingangsknoten zu finden, und Empfangen des Video-Streams von einem Verbreiter am Eingangsknoten; und
Ermöglichen, dass ein oder mehrere Abonnenten den Video-Stream abonnieren, durch, für jeden Abonnenten:
Verwenden der Abbildungsinfrastruktur, um einen Austrittsknoten zu finden, und Liefern des Video-Streams von dem Austrittsknoten an den Abonnenten.

## Revendications

1. Système (100) destiné à la collaboration d'entreprise associé à un réseau superposé, le réseau superposé comprenant des machines capables d'entrer, de transférer et de diffuser du trafic, ensemble avec une infrastructure de mise en correspondance, le système comprenant :
une application frontale (300) comprenant un composant d'application web ou mobile (316) qui s'interface avec une ou plusieurs fonctions de collaboration ou qui fournit celles-ci ;
une application dorsale (304) comprenant un composant de signalisation (306) qui maintient des informations d'état concernant chaque homologue dans une collaboration, un composant de connectivité (308) qui gère les connexions acheminées par l'intermédiaire du réseau superposé, et un composant de multiplexage (310) qui gère une session de collaboration multihomologues pour permettre à un homologue utilisateur final d'accéder aux flux multimédias des autres homologues par l'intermédiaire des machines de périphérie du réseau superposé identifiées par l'intermédiaire de l'infrastructure de mise en correspondance qui assure le suivi de la charge, de la connectivité et des emplacements d'une ou plusieurs machines de périphérie du réseau superposé plutôt que directement à partir d'un autre homologue ; et
un ensemble d'une ou plusieurs interfaces de programmation d'application, API, par l'intermédiaire desquelles le composant d'application frontale (300) interagit avec les composants d'application dorsale (304) ;
chacun des composants et des API étant mis en œuvre sous forme de logiciel exécuté dans un ou plusieurs processeurs matériels ;
ladite utilisation du réseau superposé permettant la session de collaboration multi-homologues sans nécessiter l'établissement d'une nouvelle connexion pour chaque paire d'homologues ;
ledit composant de multiplexage (310) étant configuré pour réaliser un ensemble d'opérations, comprenant :
pour chacun d'un ensemble de participants dans une visioconférence multipartite, l'obtention des informations concernant la pertinence d'un flux d'un participant ;
sur la base des informations, la détermination du flux de participants qui possède un score de pertinence donné par rapport à un ou plusieurs autres flux de participants ; et
la modification d'une qualité de flux d'un ou plusieurs des flux de participants sur la base de la détermination du flux de participant qui possède le score de pertinence donné par rapport à un ou plusieurs autres flux de participant.

2. Système selon la revendication 1, lesdites API comprenant une API JavaScript, JS, qui s'exécute en association avec une API de communication en temps réel, webRTC, et un ou plusieurs composants de langage de balisage hypertextuel Version 5, HTML5.

3. Système selon la revendication 2, ladite application frontale (300) étant une bibliothèque de scripts côté client construite sur l'API JS.

4. Système selon la revendication 3, ladite bibliothèque de scripts côté client fournissant une gestion de connexion webRTC.

5. Système selon la revendication 1, ladite session de collaboration étant l'une parmi : une vidéoconférence, une conversation, le partage d'un document et le partage d'un bureau.

6. Système selon la revendication 1, ledit composant de multiplexage (310) fournissant un routage de couche d'application multidiffusion sur protocole internet, IP, durant la session de collaboration.

7. Système selon la revendication 1, ladite application dorsale (304) comprenant en outre un composant de stockage (312) pour stocker des données provenant de la session de collaboration.

8. Système selon la revendication 1, ladite application dorsale (304) comprenant en outre un composant d'intégration de réseau téléphonique commuté public, PSTN (314).

9. Système selon la revendication 1, ladite session de collaboration multihomologue étant mise en œuvre sur des communications web en temps réel, webRTC.

10. Système selon la revendication 1, comprenant en outre un gestionnaire de session de collaboration.

11. Système selon la revendication 10, ledit gestionnaire de session de collaboration délivrant en sortie une ou plusieurs pages web à partir desquelles un utilisateur final autorisé peut exécuter une ou plusieurs opérations associées à la session de collaboration, éventuellement ladite ou lesdites opérations comprenant un parmi :
la création ou la suppression d'une salle, l'adhésion à une salle, la visualisation des participants dans une salle, la mise sur liste blanche ou sur liste noire des participants pour une salle, le réglage d'une valeur de pertinence d'un flux multimédia, la mise en sourdine ou le rétablissement du son d'un flux audio, le réglage de la qualité d'un flux multimédia, la fourniture de rétroactions, le réglage de l'équipement dans une salle, la création d'une présentation pour une salle, la création d'une salle personnalisée, la création d'une salle d'accès anonyme, le réglage de l'apparence et de la sensation d'une salle, l'autorisation des activités de collaboration spécifiques à la salle et la fourniture des liens profonds de salle.

12. Système selon la revendication 1, ledit composant de multiplexage (310) étant configuré pour réaliser un ensemble d'opérations, comprenant :
étant donné un ensemble de flux audio qui comprennent une conférence, l'identification d'un ensemble de clients dans la conférence qui sont dans un espace physique commun ;
pour l'ensemble de clients identifié, l'identification d'au moins un événement repère qui se trouve dans chacun des flux audio ;
par rapport à l'au moins un événement repère, la comparaison d'une synchronisation et d'une intensité relatives de l'événement repère, et l'utilisation des informations de synchronisation et d'intensité relatives pour déduire une position relative de chaque microphone utilisé par un client dans l'ensemble de clients ;
la combinaison des flux audio individuels reçus en provenance des microphones et l'utilisation des informations de position relative pour réaliser le rendu d'un flux audio unique qui représente un enregistrement de haute qualité de l'audio dans l'espace physique commun ; et
au lieu d'émettre en sortie des flux audio individuels de l'ensemble de flux audio, l'émission en sortie de flux audio unique.

13. Système selon la revendication 1, ladite application frontale (300) étant configurée pour réaliser un ensemble d'opérations, comprenant :
étant donné un ensemble de flux audio qui comprennent la conférence et qui sont reçus, le calcul d'une position 3D pour chaque flux audio dans un paysage sonore 3D ; et
l'émission en sortie de chaque flux audio au niveau de la position 3D calculée.

14. Système selon la revendication 1, ledit composant de connectivité (308) étant configuré pour réaliser un ensemble d'opérations, comprenant :
la publication d'un flux vidéo sur le réseau superposé à l'aide de l'infrastructure de mise en correspondance pour trouver un nœud d'entrée, et la réception du flux vidéo en provenance d'un éditeur au niveau du nœud d'entrée ; et
l'autorisation à un ou plusieurs abonnés de s'abonner au flux vidéo par, pour chaque abonné :
l'utilisation de l'infrastructure de mise en correspondance pour trouver un nœud de sortie, et l'émission en sortie du flux vidéo vers l'abonné à partir du nœud de sortie.
